**Europäisches Patentamt**

**European Patent Office**

**Office européen des brevets**

(19)

(11) Numéro de publication: **0 082 093**
**A1**

## (12) DEMANDE DE BREVET EUROPEEN

(21) Numéro de dépôt: 82420170.1

(22) Date de dépôt: 02.12.82

(51) Int. Cl.³: **D 06 P 1/22,** D 06 P 1/30,
C 01 B 11/20, C 01 B 11/22,
C 01 C 3/12

(30) Priorité: 03.12.81 FR 8122800

(43) Date de publication de la demande: 22.06.83
**Bulletin 83/25**

(84) Etats contractants désignés: **BE DE FR GB IT NL**

(71) Demandeur: **RHONE-POULENC SPECIALITES CHIMIQUES, "Les Miroirs" 18, Avenue d'Alsace, F-92400 Courbevoie (FR)**

(72) Inventeur: **Combet, André, 141, rue Joliot Curie, F-69005 Lyon (FR)**

(74) Mandataire: **Vignally, Noel et al, RHONE-POULENC RECHERCHES Centre de recherches de Saint Fons Service Brevets Boîte postale 62, F-69190 Saint Fons (FR)**

(54) Procédé de préparation ou de régénération d'agents oxydants utilisés notamment pour la fixation de colorants.

(57) La présente invention concerne un procédé permettant la préparation ou la régénération des oxydants utilisés notamment pour la fixation des colorants pour cuve et des colorants au soufre.

Elle se caractérise essentiellement par un traitement à l'ozone de ces oxydants se trouvant à l'état réduit.

Ce procédé s'applique plus particulièrement à la préparation et à la régénération des iodates de sodium ou de potassium et des bromates de sodium ou de potassium.

EP 0 082 093 A1

PROCEDE DE PREPARATION OU DE REGENERATION D'AGENTS OXYDANTS
UTILISES NOTAMMENT POUR LA FIXATION DE COLORANTS.
------------------------------------------------

La présente invention a trait notamment au domaine de la teinture des textiles à l'aide de colorants pour cuve et de colorants au soufre.

Plus particulièrement l'invention concerne un perfectionnement permettant la régénération des oxydants utilisés pour la fixation de ces colorants.

Elle concerne également de manière plus générale un procédé de préparation de tels oxydants.

Lors de la teinture des matières textiles par des colorants pour cuve ou des colorants au soufre, il est classique de traiter ces colorants par un agent réducteur, notamment par l'hydrosulfite de sodium en solution aqueuse. Le but principal de cette réduction, que l'on peut effectuer avant ou après l'application du colorant sur le textile, est de solubiliser complètement ledit colorant dans l'eau et d'en permettre ainsi une pénétration complète, sous forme de solution aqueuse, dans le textile.

Ensuite il est également classique de traiter le colorant par un agent oxydant pour lui restituer la forme oxydée qu'il avait à l'origine. Ce stade de réoxydation du colorant permet de développer entièrement sa couleur, car la couleur ou la nuance d'un colorant à l'état réduit diffère habituellement de la couleur ou de la nuance qu'il possède à l'état oxydé.

La réoxydation fait également revenir le colorant à son état insoluble et améliore ainsi la solidité de la couleur des textiles teints.

Parmi les colorants pour cuve, on peut citer ceux qui appartiennent aux séries de l'anthraquinone, des indigoïdes et des thioindigoïdes.

Parmi les colorants au soufre, on peut citer à titre d'exemple les colorants à l'indophénol sulfuré.

Les agents oxydants utilisés pour fixer les colorants sont très variés. Ce sont par exemple les ferricyanures de potassium ou de sodium ou d'ammonium, les bromites de potassium ou de sodium, les chlorites de

potassium ou de sodium, les bichromates de potassium ou de sodium, l'eau oxygénée, les bromates de potassium ou de sodium et les iodates de potassium ou de sodium.

Parmi les agents oxydants les plus souvent utilisés se trouvent les bichromates. Mais un inconvénient important de leur usage réside dans la production d'effluents toxiques.

D'autres agents oxydants parmi ceux mentionnés précédemment, bien qu'intéressants sur le plan technique, ne sont pas utilisés en raison de leur prix relativement élevé.

Il a maintenant été trouvé un procédé permettant de préparer ou de régénérer les agents oxydants ayant servi à la fixation des colorants. Ce procédé constitue un mode simple et avantageux de préparation de nombreux agents oxydants, tels que ceux cités précédemment. Il représente aussi un perfectionnement indirect des techniques de teinture à l'aide de colorants pour cuve et de colorants au soufre, car en réduisant le coût d'utilisation des agents oxydants, il permet de choisir ceux qui sont les mieux adaptés techniquement et/ou qui sont les moins générateurs de pollution.

Ce procédé de régénération consiste essentiellement à traiter par l'ozone les solutions aqueuses qui proviennent notamment de la surverse des bains d'oxydation ainsi que des bains de lavage et qui contiennent la forme réduite des agents oxydants utilisés pour fixer les colorants.

L'invention se présente donc d'une part comme un procédé de perfectionnement aux procédés de fixation des colorants pour cuve et des colorants au soufre sur des fibres textiles à l'aide d'un agent oxydant ou solution aqueuse caractérisé en ce que l'on régénère ledit agent oxydant, qui se trouve à l'état réduit, par traitement à l'ozone.

D'autre part l'invention consiste plus largement en un procédé de préparation d'agents oxydants, en particulier des iodates de potassium et de sodium, des bromates de potassium et de sodium et des ferricyanures de potassium et de sodium, caractérisé en ce que l'on oxyde la forme réduite desdits agents oxydants en solution aqueuse par l'ozone.

En pratique la préparation ou le traitement de régénération est effectué le plus souvent à l'aide d'ozone dilué par l'air ou l'oxygène ou un gaz inerte.

Le traitement de régénération peut consister à faire barboter le mélange ozoné soit directement dans le bain de fixation dans lequel trempe la fibre textile, soit dans une cuve dans laquelle l'effluent aqueux contenant la forme réduite de l'agent oxydant est récupéré.

Il est généralement plus intéressant d'effectuer une circulation à contrecourant de la solution à traiter et du mélange ozoné ou encore d'envoyer ces 2 flux dans un dispositif, permettant un bon transfert gaz-liquide, tel qu'un éjecteur, suivi du passage du mélange des deux flux, par exemple dans une colonne garnie de charges solides inertes telles que des billes de verre, de l'alumine ou de la silice.

Lorsque l'on opère par circulation des flux de gaz ozoné et de solution aqueuse d'agent oxydant à l'état réduit à traiter, il est nécessaire de prévoir un recyclage du flux de solution à traiter ou des 2 flux, afin de ne soutirer ladite solution que lorsque l'agent oxydant se trouve en totalité ou en majeure partie sous sa forme oxydée.

L'effluent ainsi traité peut être réutilisé après compensation de la quantité d'agent oxydant demeurée sur la fibre textile. Les différents bains qui contiennent l'agent oxydant sous sa forme réduite ayant des concentrations faibles en cet agent, il est préférable de les concentrer préalablement au traitement par l'ozone.

On peut concentrer ces bains par tout moyen connu comme l'élimination d'une partie de l'eau par chauffage, le passage desdits bains sur des résines échangeuses d'ions ou l'osmose inverse. Avant d'entreprendre cette concentration, il est le plus souvent utile d'éliminer les matières en suspension par filtration à l'aide de filtres de faible porosité. Parmi les méthodes de concentraton des solutions aqueuses d'agent oxydant à l'état réduit, l'osmose inverse est particulièrement intéressante.

Les membranes d'osmose inverse utilisées sont généralemnt en acétate de cellulose, en alcool polyvinylique, en polyamide ou en polysulfone sulfonée. Les pressions appliquées à ces membranes varient selon le type de membrane utilisé. Elle varient généralement pour cette application d'environ 20 bars à environ 40 bars, mais sans que ces valeurs indicatives soient critiques.

Par cette opération de concentration, on divise le volume de la solution aqueuse à traiter par l'ozone, par un facteur qui est couramment de 5 à 10.

Lorsque le procédé selon l'invention sert à préparer des agents oxydants, il peut être mis en oeuvre selon l'une quelconque des variantes indiquées pour la régénération des agents oxydants usés, mais il s'appliquera alors à des solutions aqueuses synthétiques des composés à oxyder et non aux bains usés provenant des installations de teinture.

Lesdites solutions aqueuses synthétiques ont des concentrations très variables en composés à oxyder. Généralement ces concentrations, exprimées en poids de composé à oxyder par rapport au poids total de la solution, varient de 1 % à 80 % et plus fréquemment de 5 % à 60 %.

Le procédé selon l'invention est plus particulièrement intéressant pour la préparation de l'iodate de potassium et de l'iodate de sodium à partir des iodures correspondants et la préparation du bromate de potassium et du bromate de sodium à partir des bromures correspondants.

Parmi les agents oxydants efficaces pour la fixation des colorants pour cuve et des colorants au soufre, l'iodate de potassium, l'iodate de sodium et leurs mélanges sont tout particulièrement intéressants.

Le brevet américain n° 3 775 047, qui décrit un procédé d'oxydation par l'iodate de potassium ou l'iodate de sodium de colorants au soufre sur des fibres textiles en cellulose naturelle ou régénérée, est incorporé à la présente description par référence.

Il est bien évident que le procédé selon la présente invention n'est aucunement limité à la régénération des iodates utilisés dans le cadre de ce procédé d'oxydation de colorants au soufre et que ledit procédé d'oxydation n'est indiqué qu'à titre d'illustration particulière d'un cas, où la régénération des agents oxydants se trouvant à l'état réduit est très judicieuse.

Le procédé selon l'invention peut s'appliquer également bien à la régénération d'autres agents oxydants tels que par exemple le bromate de sodium, le bromate de potassium, le ferricyanure de sodium, le ferricyanure de potassium et le ferricyanure d'ammonium.

Un mode préféré du procédé appliqué à la régénération des agents oxydants consiste à filtrer les solutions provenant des surverses du bain d'oxydation des colorants par l'iodate de potassium et/ou l'iodate de sodium ou des bains de lavage des fibres textiles teintes. Puis ces solutions contenant essentiellemnt des iodures de potassium et/ou de sodium sont concentrées par passage dans un appareil à osmose inverse. Les solutions concentrées obtenues sont ensuite traitées par un mélange oxygène-ozone ou air-ozone selon l'une des techniques indiquées précédemment. La concentration en ozone du mélange n'est pas critique et peut varier dans de larges proportions. Le plus pratique pour obtenir le mélange ozoné désiré est d'utiliser un ozoniseur que l'on trouve dans le commerce.

Les débits relatifs du mélange ozoné et de la solution d'iodure à traiter sont calculés de manière simple en fonction des concentrations respectives en ozone et en iodure.

Un avantage remarquable du procédé selon la présente invention réside en ce que l'emploi d'ozone ne provoque la formation d'aucun sous-produit solide ou liquide difficile à éliminer ou polluant.

Un autre avantage dudit procédé est la rapidité de la réaction de régénération des agents oxydants.

L'agent oxydant régénéré par le procédé selon l'invention peut être utilisé notamment pour la fixation des colorants pour cuve et des colorants au soufre sur des fibres textiles.

L'exemple suivant illustre un mode d'application de la présente invention, mais celle-ci ne saurait être limitée au dispositif et au mode opératoire spécifiques qu'il décrit.

Exemple.

L'effluent (A) provenant de la surverse d'un bassin d'oxydation de colorant au soufre déposé sur fibres de coton a la composition suivante :
- Iodates ($IO_3{}^-$)..................... 7 mg/l
- Iodures ($I^-$)..................... 570 mg/l
- Iode libre ($I_2$) ..................... 5 mg/l
- Densité ..................... 1,002
- pH ..................... 5,5

- Teneur en carbone .................... 65 mg/l
- DCO ............................... 170 mgO$_2$/l
- Matières en suspension ............. 50 mg/l

Habituellement, un tel effluent n'est pas réutilisé étant donné que son pouvoir oxydant dû aux ions iodates n'existe plus.

Un tel effluent est issu d'une solution contenant initialement :

- 0,8 g/l d'iodate de potassium,
- 10 ml/l d'acide acétique

Cette solution constitue le bain d'oxydation proprement dit ; celui-ci est additionné en permanence au cours du traitement de coloration par une solution plus concentrée d'un même mélange afin de maintenir une concentration constante en iodate de potassium et acide acétique.

L'effluent est tout d'abord concentré par osmose inverse, puis son pouvoir oxydant est régénéré par oxydation à l'oxygène ozoné.

a) TECHNIQUE DE LA CONCENTRATION PAR OSMOSE INVERSE

10 litres de la solution (A) décrite plus haut sont préalablement filtrés sur filtre de porosité 50 microns afin d'éliminer les matières en suspension.

La solution ainsi préparée est passée sur un module d'osmose inverse constitué de membranes en polyamide..

La pression appliquée est de l'ordre de 20 bars. Le pH de la solution légèrement acide n'est pas modifié.

La concentration obtenue en fin d'essai atteint 4,3 g/l I$^-$, soit 5,6 g/l IK dans le concentrat (B), ce qui correspond à un facteur de concentration de 7,54 (le volume final du concentrat est de 1,2 litre).

L'augmentation de la concentration en iodure dans le concentrat et dans l'osmosat s'établit ainsi au cours de l'essai :

| Durée (heures) | Concentrat (B) | Osmosat |
|---|---|---|
| 0 | 570 mg/l | 18 mg/l |
| 1 | 620 mg/l | 25 mg/l |
| 6 | 995 mg/l | 48 mg/l |
| 21 | 1 450 mg/l | 90 mg/l |
| 30 | 2 800 mg/l | 305 mg/l |
| 38 | 3 300 mg/l | 410 mg/l |
| 40 | 4 300 mg/l | 890 mg/l |

On observe donc que le taux de rejet diminue au cours de l'essai : il passe de 96 % en début d'essai à 79 % lorsque la concentration atteint 4,3 g/l I$^-$.

On observe également une légère chute du débit d'osmose par suite d'un encrassement, d'ailleurs réversible, de la membrane.

Le taux de rejet est fonction de la concentration et de la pression appliquée sur l'osmoseur ; pour maintenir celui-ci à une valeur suffisante, il faut donc augmenter la pression sur l'osmoseur.

b) OXYDATION DE LA SOLUTION (B) D'IODURE DE POTASSIUM CONCENTREE PAR OSMOSE INVERSE.

La solution (B) obtenue est alimentée à l'aide d'une pompe (1) par un conduit (2) dans un appareillage comportant principalement une colonne (3) garnie de billes de verre.

La colonne (3) est en verre ; elle a un diamètre intérieur de 30 millimètres et une hauteur de 300 millimètres.

Cette solution (B) est alimentée en tête de colonne au moyen d'un éjecteur (4).

Dans l'éjecteur (4) la solution arrive par le conduit (5) et une buse axiale (6), un mélange d'oxygène ozoné est alimenté par le conduit (7) dans l'espace annulaire (8) situé entre la paroi de l'éjecteur (4) et la buse (6).

Le mélange d'oxygène ozoné est obtenu dans un ozoniseur (9) pourvu d'une tubulure (10) d'entrée de l'oxygène, et d'un conduit (11) de sortie de l'oxygène ozoné, comportant un débitmètre (12).

La solution en cours de traitement est recueillie en pied de colonne (3) dans un récipient (13). Le récipient (13) est muni d'un conduit (14) de dégagement de l'excès d'oxygène ozoné. Le récipient (13) comporte également un conduit (15) se divisant en trois branches (16, 17, 18). La branche (16) permet l'insertion d'une électrode (23) de mesure de pH.

La branche (17) est pourvue d'une vanne (19), elle permet le soutirage de la solution traitée.

La branche (18) permet le recyclage par le conduit (20) et au moyen d'une pompe (21) de la solution en cours de traitement en amont de l'éjecteur (4). Le conduit (20) est pourvu d'un débitmètre (22).

La puissance appliquée (80 W) à l'ozoniseur est telle que ce dernier délivre de l'oxygène enrichi en ozone à la concentration de 60 mg/l pour un débit d'oxygène de 100 m/h.

Le débit de recyclage de la solution en cours de traitement sur la colonne (3) garnie de billes de verre est de l'ordre de 300 l/h.

L'éjecteur placé en tête de colonne a pour rôle d'assurer le transfert gaz-liquide.

Dans ces conditions, on observe une oxydation rapide de l'iodure en iodate avec passage intermédiaire par la forme iode :

| Temps (mn) | I$_2$ (mg/l) | IO$_3$K (mg/l) |
|:---:|:---:|:---:|
| 0 | 0 | 0 |
| 2 | 0 | 10 |
| 4 | 267 | 10 |
| 6 | 1130 | 138 |
| 8 | 1650 | 538 |
| 10 | 1550 | 1220 |
| 12 | 2500 | 2074 |
| 14 | 572 | 3416 |
| 16 | 63 | 5307 |
| 18 | 0 | 5673 |
| 20 | 0 | 6000 |

Après 20 minutes d'oxydation on a obtenu 83 % d'iodate de potassium par rapport à l'iodure engagé.

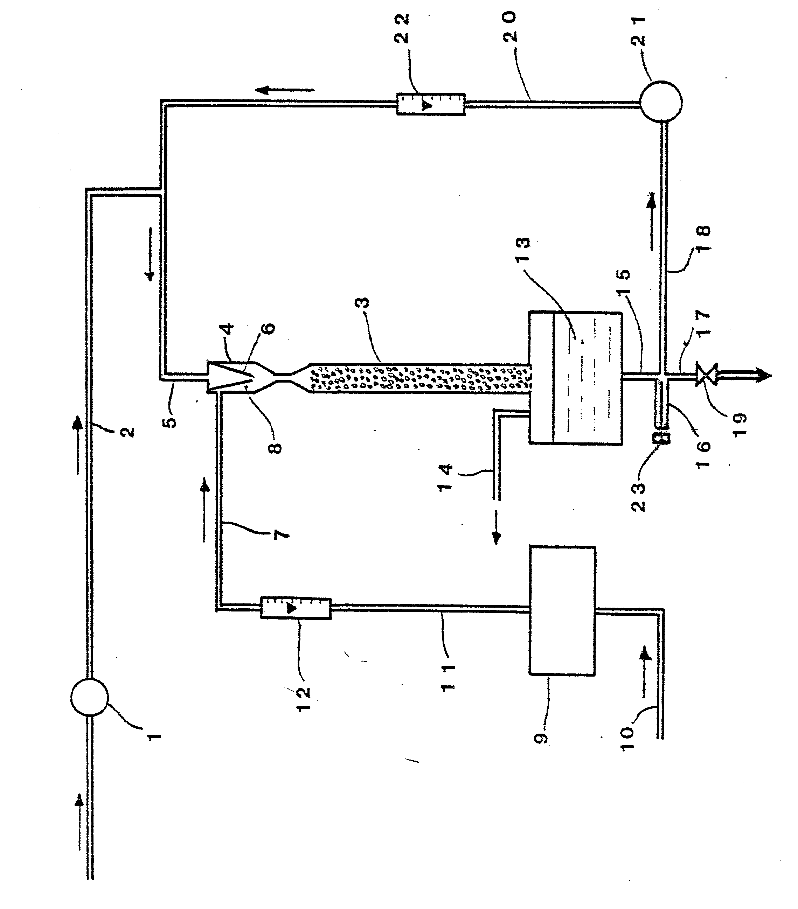

REVENDICATIONS

--------------------------------

1) Procédé de préparation d'agents oxydants utilisables notamment pour la fixation de colorants caractérisé en ce que l'on oxyde la forme réduite desdits agents oxydants en solution aqueuse par l'ozone.

2) Procédé selon la revendication 1, caractérisé en ce que l'agent oxydant à l'état réduit provient de bains aqueux utilisés dans les procédés de fixation des colorants pour cuve et des colorants au soufre sur des fibres textiles.

3) Procédé selon l'une des revendications 1) et 2), caractérisé en ce que l'agent oxydant que l'on prépare ou que l'on régénère est choisi dans le groupe constitué par l'iodate de sodium, l'iodate de potassium, le bromate de sodium, le bromate de potassium, le ferricyanure de potassium, le ferricyanure de potassium, le ferricyanure d'ammonium et leurs mélanges.

4) Procédé selon l'une des revendications 1) à 3) caractérisé en ce que l'agent oxydant que l'on prépare ou que l'on régénère est l'iodate de sodium, l'iodate de potassium, le bromate de sodium, le bromate de potassium ou l'un de leurs mélanges.

5) Procédé selon l'une des revendications 1) à 4), caractérisé en ce que l'ozone est mis en oeuvre sous forme d'oxygène ozoné ou d'air ozoné.

6) Procédé selon la revendication 2), caractérisé en ce que l'on concentre la solution aqueuse d'agent oxydant à l'état réduit par osmose inverse avant son traitement à l'ozone.

7) Procédé selon la revendication 2), caractérisé en ce que l'on concentre la solution aqueuse d'agent oxydant à l'état réduit par passage sur résine échangeuse d'ions avant son traitement à l'ozone.

8) Procédé selon les revendications 2) et 4), caractérisé en ce que l'on concentre par osmose inverse la solution aqueuse d'iodure de sodium ou d'iodure de potassium ou de bromure de sodium ou de bromure de potassium ou de l'un de leurs mélanges, que l'on envoie des débits appropriés de cette solution concentrée d'une part et d'un mélange d'oxygène et d'ozone d'autre part, dans un dispositif permettant un transfert gaz-liquide et que l'on recycle la solution d'iodure-iodate ou de bromure-bromate ainsi obtenue jusqu'à transformation majoritaire ou totale des ions iodures en ions iodates et/ou des ions bromures en ions bromates.

9) Procédé selon les revendications 1),3) ou 4), caractérisé en ce que la solution du composé à oxyder a une concentration comprise généralement entre 1 % et 80 % en poids et plus fréquemment entre 5 % et 60 %.

10) Utilisation des agents oxydants obtenus par le procédé selon l'une quelconque des revendications 1 à 9, pour la fixation des colorants pour cuve et des colorants au soufre sur des fibres textiles.

0082093

1/1

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 064 403 (MARTIN MARIETTA CORPORATION) *En entier, et en particulier page 6, lignes 24-34* | 1-3,10 | D 06 P 1/22<br>D 06 P 1/30<br>C 01 B 11/20<br>C 01 B 11/22<br>C 01 C 3/12 |
| | --- | | |
| D,A | US-A-3 775 047 (C.D.WESTON) *En entier* | 1-4,10 | |
| | --- | | |
| A | CHEMICAL ABSTRACTS, vol. 85, no. 18, 1 novembre 1976, page 921, no. 136463r, Columbus Ohio (USA); Ya.V.KHENTOV et al.: "Study of the improvement of oxidation of bromide ions with ozone in aqueous solutions". & ZH. PRIKL. KHIM. (LENINGRAD) 1976, 49(5), 1141-2. *Résumé* | 3-5 | |
| | | | **DOMAINES TECHNIQUES RECHERCHES (Int. Cl. ³)** |
| | --- | | |
| A | CHEMICAL ABSTRACTS, vol. 89, no. 24, 11 décembre 1978, page 462, no. 204821r, Columbus Ohio (USA); S.L.GOBOV et al.: "Kinetics of iodine and bromine ions oxidation by ozone in aqueous solutions". & MATER. - VSES. MEZHVUZ. KONF. OZONU, 2nd 1977, 7-8. *Résumé* | 3-5 | D 06 P<br>C 01 B<br>C 01 C |
| | ---     -/- | | |

Le présent rapport de recherche a été établi pour toutes les revendications

| Lieu de la recherche LA HAYE | Date d'achèvement de la recherche 10-03-1983 | Examinateur DEKEIREL M.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82

**Office européen**
**des brevets**

## RAPPORT DE RECHERCHE EUROPEENNE

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | CHEMICAL ABSTRACTS, vol. 86, no. 24, 13 juin 1977, page 136, no. 173693g, Columbus Ohio (USA); A.F.CHUDNOV: "Displacement of iodine and bromine by ozone from salts". & ZH. VSES. KHIM. O-VA. 1977, 22(1), 99-100. *Résumé* | 3-5 | |
| | --- | | |
| A | CHEMICAL ABSTRACTS, vol. 85, no. 10, 6 septembre 1976, page 315, no. 67616d, Columbus Ohio (USA); T.N.HENDRICKSON et al.: "Treatment of complex cyanide compounds for reuse or disposal". & U.S. ENVIRON. PROT. AGENCY, OFF. RES. DEV.,[REP.] EPA 1973, EPA-R2-73-269, 151 pp. *Résumé* | 3,5 | |
| | ----- | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 10-03-1983 | DEKEIREL M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82